# EUROPÄISCHE PATENTANMELDUNG

(11) **EP 1 712 785 A2**
(43) Veröffentlichungstag der Anmeldung: **18.10.2006**
(21) Anmeldenummer: 06007871.4
(22) Anmeldetag: 13.04.2006
(51) Int. Cl.: F03B 17/06

(54) **Strömungskraftwerk**

(30) Priorität: 13.04.2005 AT 6212005
(71) Anmelder: Riegerbauer, Hermann, 8430 Leibnitz (AT)
(72) Erfinder: Riegerbauer, Hermann, 8430 Leibnitz (AT)

(57) **Zusammenfassung**

Strömungskraftwerk (1), welches mindestens eine Vorrichtung zur Stromerzeugung (2), die von mindestens einem Schaufelrad (3) angetrieben wird, und einen Fixlerrahmen (4) umfasst, wobei durch eine geeignete Fixierung des Strömungskraftwerks (1) immer gewährleistet werden kann, dass das Strömungskraftwerk (1) auch dann seine Position hält, wenn sich der Wasserstand des Flusses ändert. Zusätzlich ist durch die leichte Bauweise des Strömungskraftwerks (1) auch ein Einsatz in kleineren Gewässern möglich. Theoretisch könnte das erfindungsgemäße Strömungskraftwerk (1) auch in kleinen Bächen eingesetzt werden.

## Beschreibung

Die Erfindung betrifft Strömungskraftwerk (1), welches mindestens eine Vorrichtung zur Stromerzeugung (2), die von mindestens einem Schaufelrad (3) angetrieben wird, und einen Fixierrahmen (4) umfasst.

Im Stand der Technik sind Strömungskraftwerke bekannt. Diese Strömungskraftwerke überspannen Gewässer von einem Ufer zum anderen oder sie sind stationär an einem Ort verankert. Von Nachteil ist dabei, dass umfangreiche Baumaßnahmen zur Sicherung dieser Strömungskraftwerke getroffen werden müssen.

Eine Aufgabe der Erfindung ist es daher, ein Strömungskraftwerk zu schaffen, welches über eine geeignete Vorrichtung einstellbar in einem bestimmten Bereich eines Flusses gehalten wird.

Diese Aufgabe wird erfindungsgemäß mit einem Strömungskraftwerk der eingangs genannten Art dadurch gelöst, dass der Fixierrahmen stromaufwärts eine Einstellleiste und zum Ufer gerichtet eine Stabilisierungsleiste umfasst, wobei die Einstellleiste mit einer Führungsvorrichtung und die Stabilisierungslciste mit einer Stabilisiertiztgsvorrichtung verbunden ist.

Es ist ein Verdienst der Erfindung, dass ein Strömungskraftwerk an beliebigen Stellen in einen Fluss gesetzt werden kann. Durch eine geeignete Einstellung des Strömungskraftwerks kann immer gewährleistet werden, dass das Strömungskrnftwerk auch dann seine Position halt, wenn sich der Wasserstand und / oder die FIieBgeschwindigkeit des Flusses ändert. Zusätzlich ist durch die leichte Bauweise des Strömungskraftwerks auch ein Einsatz in kleineren Gewässern möglich. Theoretisch könnte das erfindungsgemäße Strömungskraftwerk auch in kleinen Bächen eingesetzt werden.

In einer bevorzugten Ausführungsform der Erfindung sind die Führungsvorrichtung und / oder die Stabilisierungsvorrichtung starr mit einer Verankerung verbunden.

Günstigerweise sind die Führungsvorrichtung und / oder die Stabilisierungsvorrichtung elastisch mit einer Verankerung verbunden.

Ein weiterer Vorteil der Erfindung liegt darin, dass die Führungsvorrichtung und /oder die Stabilisierungsvorrichtung beweglich über Gelenke mit dem Fixierrahmen und / oder der Verankerung verbunden sind.

In einer bevorzugten Ausführungsform weist die Einstellleiste mindestens zwei Befestigungspunkte auf.

Ein weiterer Vorteil der Erfindung liegt darin, dass die Befestigungspunkte außermittig angeordnet sind.

Es kann auch von Vorteil sein, dass über die Führungsvorrichtung und / oder die Stabilisierungsvorrichtung die Stromabnahme erfolgt.

In einer bevorzugten Ausführungsform kann die Stabilisiemngsleiste mindestens einen Befestigungspunkt aufweisen.

Einen Ausführungsform mit einem hohen praktischen Nutzen besteht darin, dass die Befestigungspunkte verschiebbar sind.

Eine Ausführungsform mit erhöhtem Wirkungsgrad ergibt sich dadurch, dass das Schaufelrad aus mindestens einem Auftriebskörper besteht.

Ein weiterer Vorteil liegt darin ,dass mindestens ein Schwimmkörper ohne Schaufel zur Stabilisierung vorgesehen ist.

Besonders vorteilhart ist es, wenn die Schaufelräder (3) mindestens einen solchen Auftrieb aufweisen, dass der Fixierrahmen über dem Wasserspiegel liegt.

Eine weitere Verbesserung der gegenständlichen Erfindung stellt dar, dass mindestens ein Schaufelrad sich flaschenhalsförmig verengend am Fixerrahmen gelagert ist.

Eine besonders an den Verwendungszweck angepasste Ausführungsform lässt sich erzielen, wenn die Schaufelräder und / oder der Fixierrahmen aus Kunststoff und / oder Metall gefertigt sind.

Günstigerweise ist die Einstellleiste erhöht am Fixierrahmen angebracht und eine Verkleidung über die gesamte Breite der erhöhten Einstellleiste zum Fixierrahmen hin vorgesehen.

Ein bevorzugtes Herstellungsfahren ist, dass mindestens ein Schaufelrad und der Fixierrahmen in Kunststoffformen geblasen oder gegossen werden.

Die Erfindung samt weiterer Vorteile ist im Folgenden anhand einiger nicht einschränkender Auslubrungsbeispicle näher erläutert, welche in den Zeichnungen dargestellt sind. In dieser zeigen:
Fig. 1 eine perspektivische Ansicht einer Variante des erfindungsgemäßen Strömungskraftwerks;
Fig. 2 eine schematische Darstellung des erfindungsgemäßen Strömungskmftwerks in einem Gewässer samt Verankerung
Fig. 3 eine schematische Darstellung einer Ausführungsform des erfindungsgemäBen Strömungskraftwerks in einem Gewässer samt Verankerung;
Fig. 4 eine schematische Darstellung eines Abschnittes des Fixierrahmens mit der Einstellleiste und der Verkleidung

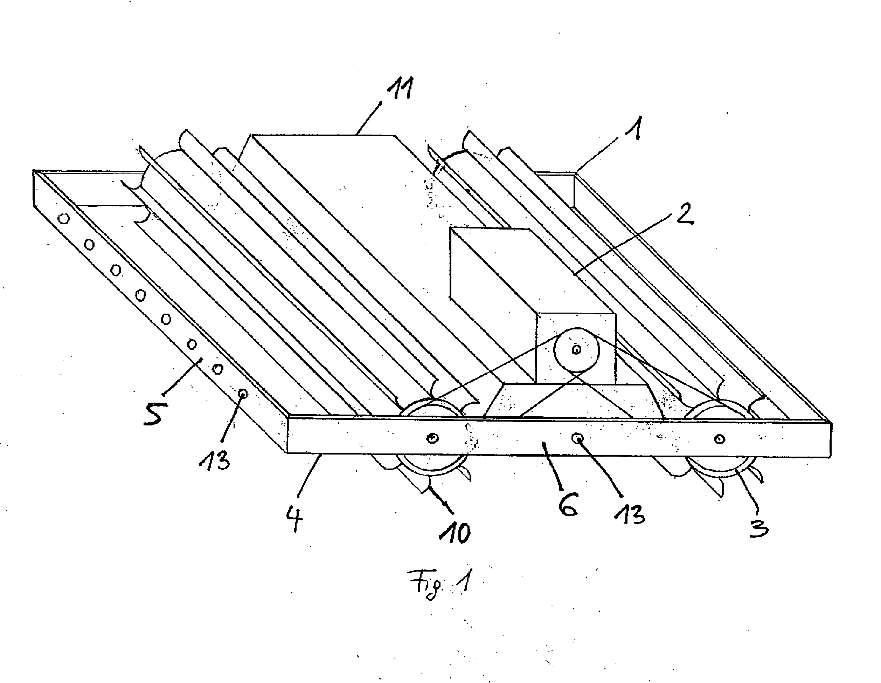

Gemäß Fig. 1 umfasst das Strömungskraftwerk (1) mindestens ein Schaufelrad (3), welches mit einer Vorrichtung zur Stromerzeugung gekoppelt ist. Die Kopplung kann über Zahnriemen, Bänder, Ketten oder auch über Zahnräder erfolgen. Sollte das Schaufelrad (3) sich nur langsam drehen kann eine geeignete Übersetzung für den Antrieb der Stromerzeugungsvorrichtung(2) vorgesehen sein. Weiters besteht die Möglichkeit dass die Stromerzeugungsvorrichtung direkt mit der Verlängerung der Achse des Schaufelrades verbunden ist. Diese Ausführungsform ist vor allem für größere Bauformen geeignet. Die Schaufelräder (3) sind am Fixierrahmen (4) gelagert. Eine Variante der Lagerung kann auch eine geänderte Bauform des Schaufelrades (3) umfassen. Der äußere Teil des Schaufelrades (3), welcher am Fixierrahmen gelagert ist, kann flaschenhalsförmig zusammenlaufen. Auf diese Weise wird der Stromungsverlauf verbessert, ein Verfangen des Treibguts verhindert und die Vefletzungsgefahr für das Bedienpersonal verringert. Am Fixierrahmen (4) kann eine Plattform (11) für die Stromerzeugungsvorrichtung (2) und begehbar für Wartung und Reparatur angebracht sein. Diese Plattform (11) kann aus Kunststoff oder Metall bestehen. Diese Plattform (11) kann cinstückig mit dem Fixierrahmen im Blas- oder Gussverfahren aus Kunststoff hergestellt werden. Auf diese Weise können sehr kleine und leichte Strömungskraftwerke (1) erzeugt werden, die in Gewässern mit unterschiedlichster Tiefe eingesetzt werden können. Vorstellbar ist sogar, dass das Strömungskraftwerk (1) tragbar gefertigt ist und somit für den mobilen Einsatz brauchbar ist. Ebenso vorstellbar ist, dass die Schaufelräder (3) aus Holz gefertigt werden. Besonders geeignet dafür ist Erlenholz, welches im Wasser sehr lange stabil bleibt. Unabhängig von der Materialart können die einzelnen Schaufel an deren äußeren Enden (10) abgerundet sein, um Treibgut leichter abgleiten zu lassen.

Optimalerweise ist der Auftrieb des Strömungskraftwerks (1) so gewählt, dass der Fixierrahmen (4) oberhalb des Wasserspiegels liegt. Bei Verwendung von einem Schaufelrad (3) kann dies durch einen weiteren Auftriebskörper erreicht werden.

Der Fixierrahmen (4) weist eine Einstellleiste (5) auf, die mehrere Befestigungspunkte (13) hat. Diese Befestigungspunkte (13) werden zur optimalen Einstellung des Strömungskrafhverks (1) im Gewässer verwendet. Die Einstellleiste (5) kann parallel oder auch in einem Winkel zum Schaufelrad (3) sein. Ebenso umfasst der Fixierrahmen (4) eine Stabilisierungsleiste(6), welche ebenfalls Befestigungspunkte (13) aufweist. Im Ausführungsbeispiel ist der Winkel zwischen Einstellleiste (5) und Stabilisierungsleiste (6) etwa 90°. Sollte die Stellung des Schaufelrades (3) aber anders gewählt werden, so kann sich auch dieser Winkel verändem. Durch Veränderung der Befestigung an den Befestigungspunkte (13) kann das Strömungskraftwerk (1) an die Stärke der Strömung angepasst und dadurch die optimale Position beibehalten werden.

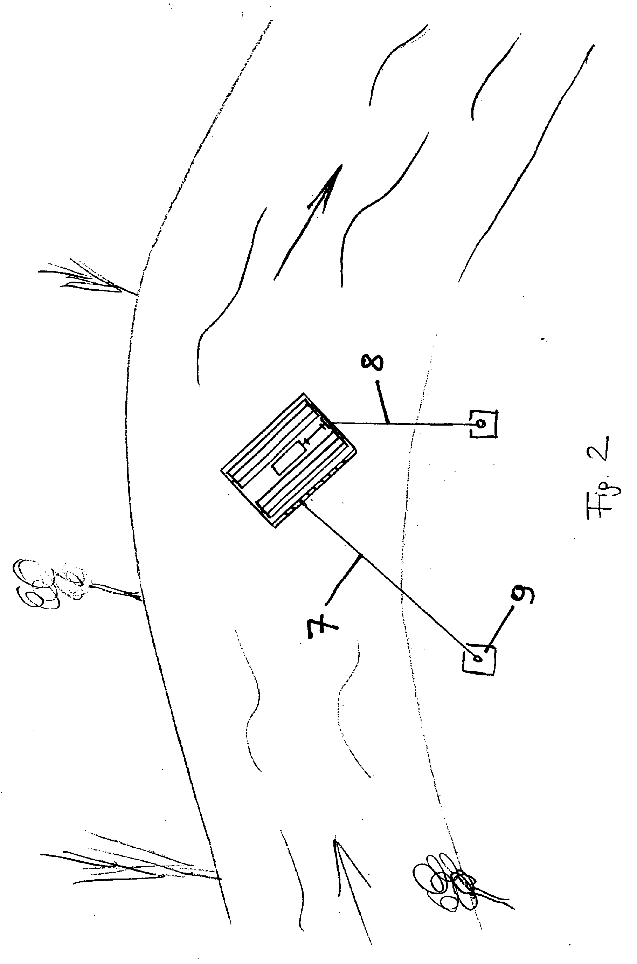

In der schematischen Darstellung in Fig. 2 sicht man ein Strömungskraftwerk (1), welches über eine Führungsvorrichtung (7) und eine Stabilisierungsvorcichtung (8) konstant an einer Stelle des Gewässers gehalten wird. Beide Vorrichtungen, (7, 8) werden am Ufer des Gewässers verankert. Die Verbindung zwischen der Verankerung (9) und den beiden Vorrichtungen (7,8) sollte drehbar sein, wodurch Veränderungen mit ausgeglichen werden können- Damit eine stabile Position des Strömungskraftwerks erreicht wird, sollte, die Führungsvorrichtung (7) aussermittig hin zum gegenüberliegenden. Ufer drehbar an einem Befestigungspunkt (13) der Einstellleiste (5) angebracht sein. Ebenso ist die Stabilisierungsvorrichtung (8) drehbar an einem Befestigungspunkt (13) der Stabilisierungsleiste (6) angebracht.

Über einen geeigneten Verscbiebemechanismus können sowohl die Befestigungspunkte (13) an der Einstellleiste (5) als auch die Befestigungspunkte (13) an der Stabilisierungsleiste (6) verstellt werden. Auf diese Weise kann ein Strömungskraftwerk (1), welches seinen Abstand zum Ufer durch geeignete Sensoren bestimmen kann, seine Position verändern, sofern sich die Wasser oder Strömungsverhältnisse im Gewässer ändern.

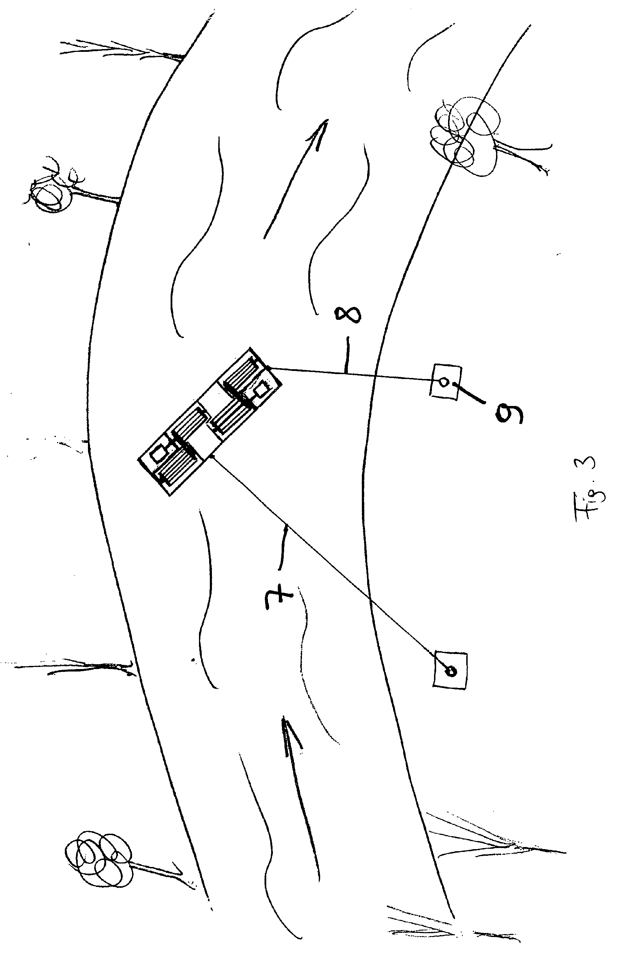

Eine besondere Ausführungsform der Erfindung ist in Fig. 3 gezeigt. Mehrere Schaufelräder (3) sind versetzt an einem Fixierrahmen (4) angebracht und erlaubten damit eine besser Nutzung des Gewässers.

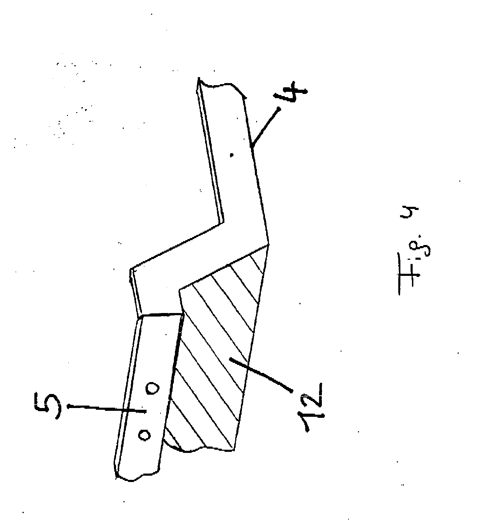

Um eine Schutz gegen Treibgut zu gewährleisten, kann die Einstellleiste (5), wie in Fig. 4 gezeigt, erhöht am Fixierrahmen (4) angebracht sein und eine Verkleidung (12) bogenförmig vom höchsten Punkt der Einstellleiste (5) bis etwa zur Höhe des Lagers des Schaufelrades (3) am Fixierrahmen gezogen sein. Die Verkleidung (12) sollte stabil, bevorzugt aus Metall, sein und etwaige Wellen oder Wasserspritzer auf das Schaufelrad (3) lenken. Durch Verwendung der Verkleidung (12) kann das Strömungskraftwerk (1) auch nur mit einem Schaufelrad (3) ausgestattet sein. Der Druck des Wasser auf die Verkleidung (12) erfüllt die gleiche Funktion wie ein Auftriebskörper. Bei dieser Ausführungsform muss der Auftrieb des Strörnungskmftwerks (1) aber so gewählt werden, dass der Fixierrahmen (4) ins Wasser eintaucht.

## Patentansprüche

1. Strömungskraftwerk (1) eimfassend mindestens eine Vorrichtung zur Stromerzeugung (2), die von mindestens einem Schaufelrad (3) angetrieben wird, und einen Fixierrahmen (4)
**dadurch gekennzeichnet, dass**
der Fixierrahmen (4) stromaufwärts eine Einstellleiste (5) und zum Ufer gerichtet eine Stabilisierungsleiste (6) umfasst, wobei die Einstellleiste (5) mit einer Führungsvorrichtung (7) und die Stabilisierungsleiste (7) mit einer Stabilisierungsvorrichtung (8) verbunden ist

2. Strömuhgskraftwerk (1) nach Anspruch 1,
**dadurch gekennzeichnet, dass**
die Führungsvorrichtung (7) und / oder die Stabilisierungsvorrichtung (8) starr mit einer Verankerung (9) verbunden sind.

3. Strömungsknutwerk (1) nach Anspruch 1 oder 2,
**dadurch gekennzeichnet, dass**
die Führungsvorrichtung (7) und / oder die Stabilisierungsvorrichtung (8) elastisch mit einer Verankerung (9) verbunden sind.

4. Strömungskmftwerk (1) nach einem der vorangegangenen Ansprüche,
**dadurch gekennzeichnet, dass**
die Führungsvorrichtung (7) und / oder die Stabilisierungsvorrichtung (8) beweglich mit dem Fixierrahmen (4) und / oder der Verankerung (9) verbunden sind.

5. Strömungskraftwerk (1)nach einem der vorangegangenen Ansprüche,
**dadurch gekennzeichnet, dass**
die Einstellleiste (5) mindestens zwei Befestigungspunkte (13) aufweist

6. Strömungskraftwerk (1) nach Anspruch 5,
**dadurch gekennzeichnet, dass** die Befestigungspunkte (13) außermittig angeordnet sind.

7. Strömungskraftwerk (1) nach einem der vorangegangenen Ansprüche,
**dadurch gekennzeichnet, dass**
die Stabilisierungsleiste (6) mindestens einen Befestigungspunkt (13) ausweist.

8. Strömungskraftwerk (1) nach Anspruch 6 oder 7,
**dadurch gekennzeichnet, dass**
die Befestigungspunkte (13) verschiebbar sind.

9. Strömtwgskraftwerk (1) nach einem der vorangegangenen Ansprüche,
**dadurch gekennzeichnet, dass**
eine Plattform (11) am Fixierrahmen (4) angebracht ist.

10. Strömungskraftwerk (1) nach einem der vorangegangenen Ansprüche,
**dadurch gekennzeichnet, dass**
eine Verkleidung (12) über die gesamte Breite der erhöhten Einstellleiste(5) zum Fixierrahmen (4) hin vorgesehen ist.
